# EUROPÄISCHE PATENTSCHRIFT

(11) **EP 2 564 164 B1**
(45) Veröffentlichungstag und Bekanntmachung des Hinweises auf die Patenterteilung: **30.03.2016**
(21) Anmeldenummer: 11721450.2
(22) Anmeldetag: 29.04.2011
(51) Int. Cl.: G01D 5/22

(54) **MAGNETISCHES LÄNGENMESSSYSTEM, LÄNGENMESSVERFAHREN SOWIE HERSTELLUNGSVERFAHREN EINES MAGNETISCHEN LÄNGENMESSSYSTEMS**
MAGNETIC LENGTH MEASURING SYSTEM, LENGTH MEASURING METHOD AND METHOD FOR PRODUCING A MAGNETIC LENGTH MEASURING SYSTEM
SYSTÈME DE MESURE DE LONGUEUR MAGNÉTIQUE, PROCÉDÉ DE MESURE DE LONGUEUR AINSI QUE PROCÉDÉ DE FABRICATION D'UN SYSTÈME DE MESURE DE LONGUEUR MAGNÉTIQUE

(30) Priorität: 30.04.2010 DE 102010019077
(43) Veröffentlichungstag der Anmeldung: 06.03.2013
(73) Patentinhaber: Continental Automotive GmbH, 30165 Hannover (DE)
(72) Erfinder: WALLRAFEN, Werner, 65719 Hofheim (DE)
(86) Internationale Anmeldenummer: PCT/EP2011/056814
(87) Internationale Veröffentlichungsnummer: WO 2011/135063

(56) Entgegenhaltungen:
- EP-A2- 0 212 406

## Beschreibung

Die vorliegende Erfindung betrifft ein magnetisches Bauteil für ein magnetisches Längenmesssystem, ein magnetisches Längenmesssystem, ein Längenmessverfahren mit einem magnetischen Längenmesssystem sowie ein Herstellungsverfahren eines magnetischen Bauteils für ein magnetisches Längenmesssystem.

Es sind unterschiedliche Verfahren zur Realisierung von linearen Wegmessungen bekannt. Magnetisch basierte Verfahren zur linearen Wegmessung weisen eine im Vergleich zu anderen Verfahren hohe Querempfindlichkeit im Hinblick auf Abstandsänderungen, Temperatur- und Magnetfeldstärkeänderungen auf. Daher gibt es immer wieder Überlegungen, eine lineare Wegmessung mit einem magnetoresistiven Winkelsensor zu realisieren. Allerdings liegen derzeit keine kostengünstigen und den Genauigkeitsanforderungen entsprechenden Lösungskonzepte vor. Weiterhin sind bekannte Streufeld basierte Messsysteme empfindlich gegenüber äußeren Störmagnetfeldern.

Eine Anordnung zur Messung einer relativen linearen Position ist aus EP 0 997 706 B1 bekannt. Die Anordnung dient zur Messung einer relativen linearen Position zwischen einem Sensor und einem magnetischen Körper, wobei die Position relativ zueinander in einer vorgegebenen Richtung linear veränderbar ist. Der Sensor ist als magnetoresistiver Winkelsensor ausgebildet und als magnetischer Körper ist ein magnetischer Streifen vorgesehen. Der magnetische Streifen weist ein Magnetpolpaar auf sowie ein über seine Länge in variierendem Winkel verlaufendes Magnetfeld, das durch entsprechende Magnetfeldlinien veranschaulicht werden kann. Auf diese Weise ist der Winkel des den magnetoresistiven Winkelsensor durchdringenden magnetischen Feldes von der relativen Position des magnetoresistiven Winkelsensors in Bezug auf den magnetischen Streifen abhängig. Aus dem Ausgangssignal des magnetoresistiven Winkelsensors ist die jeweilige relative Position ermittelbar.

Die DE 100 10 042 A1 offenbart einen linearen Wegsensor und dessen Verwendung als Betätigungsvorrichtung für Kraftfahrzeuge. Es wird ein linearer Wegaufnehmer für Kraftfahrzeuge gezeigt, welcher ein verschiebbares Element und einen Stator umfasst. Das verschiebbare Element weist einen magnetischen Encoder auf. Mit dem Stator sind Sensormodule ortsfest verbunden, die nach dem AMR-Prinzip, dem GMR-Prinzip oder dem Hall-Prinzip arbeiten. Das verschiebbare Element wird durch ein mit dem Stator verbundenes Lager geführt, welches das verschiebbare Element umgreift und axial führt. Das oder die Sensormodule sind mit dem Stator ortsfest verbünden. Entlang der Längsachse des verschiebbaren Elements sind das oder die Felderzeugungsmittel mit dem verschiebbaren Element formschlüssig verbunden.

Die EP 0 212 406 A2 offenbart eine Vorrichtung zur Erfassung einer absoluten linearen Position. Ein erstes sich wiederholendes Raster verandert sich in longitudinaler Richtung mit einer vorbestimmten Steigung, und ein zweites Raster verändert sich in longitudinaler Richtung mit einer Steigung, die sich von der ersten Steigung unterscheidet. Beide Muster sind auf der Oberfläche einer Stange ausgebildet. Ein Detektorkopfbereich ist in der Nähe .dieser Stange angeordnet, wobei der Detektorkopfbereich individuell auf das erste und das zweite Muster reagiert, und die Änderungen mit der linearen Position der Stange verknüpft sind.

Aus DE 199 10 636 A1 ist weiterhin ein Längenmesssystem bekannt, das aus einem oder mehreren magnetischen Maßstäben besteht. Bei mindestens einem Maßstab des Längenmesssystems liegt die Magnetisierungsrichtung in der Ebene seines senkrecht auf der Messrichtung stehenden Querschnitts und bildet ein Magnetisierungsmuster. In einem einfachen Fall ist diese Magnetisierung des Querschnitts homogen. Mit Fortschreiten in Messrichtung ist das Magnetisierungsmuster gegenüber dem am Maßstabsanfang zunehmend verdreht. Die Magnetisierung führt zu einem Magnetfeld, dessen Richtung mit Fortschreiten in Messrichtung ebenfalls ständig weitergedreht wird. Mit mindestens einem Magnetfeldsensor, der auf die Richtung des Magnetfeldes anspricht, wird der in der jeweiligen Position vorhandene Winkel des Magnetfelds bestimmt und kann für viele unterschiedliche Varianten des Längenmesssystems der Position eindeutig zugeordnet werden.

Bei dem verwendeten Maßstab handelt es sich um einen massiven Stabmagneten mit einer rotierenden Magnetisierung. Der Sensor befindet sich in einem vorgegebenen Abstand parallel zu der Längsachse des Stabmagneten. Der Sensor ist daher in einer solchen Entfernung zu dem Stabmagneten angeordnet, dass er in einem Bereich der maximalen Stärke des magnetischen Streufelds des Stabmagneten bewegt wird.

Ein Nachteil der Anordnungen gemäß Stand der Technik ist, dass eine Magnetisierung mit sich änderndem Winkel entlang der Länge des Magneten realisiert werden muss. Insbesondere die Anordnung gemäß dem ersten Beispiel wurde aufgrund der mit bekannten Mitteln nicht durchführbaren Magnetisierung nie realisiert.

Bei der Verwendung eines Stabmagneten, wie in DE 199 10 636 A1, ist es ebenfalls nicht durchführbar eine kontinuierliche, exakt sich drehende Magnetisierung insbesondere an den Enden des Stabs zu erzeugen. Dies hat zur Folge, dass eine Messung mit dieser Anordnung aufgrund der nicht ausreichend kontinuierlich gedrehten Magnetisierung ungenau ist.

Ein weiterer Nachteil ist, dass die Genauigkeit mit den Anordnungen gemäß Stand der Technik von der Feldhomogenität im Streufeld und somit von dem Abstand zwischen Sensor und Magnet abhängig ist. Es gibt also ein Optimum auf einer zur Längsachse des Magneten parallel liegenden Achse für den Sensor, auf der eine Messung durchgeführt werden muss. Die Anordnungen gemäß Stand der Technik arbeiten dementsprechend mit einem magnetisch inhomogenen Streufeld außerhalb des Magneten. Aus diesem Grund sind die Anordnungen gegenüber äußeren Einflüssen insbesondere äußeren störenden Magnetfeldern sehr empfindlich. Dies kann zu einer weiteren Ungenauigkeit der Messung führen.

Darüber hinaus variiert die Feldstärke auch in Abhängigkeit der Messposition. Daher muss der Stabmagnet entsprechend höhere magnetische Feldstärken zur sicheren Sättigung der Sensoren erzeugen.

Weiterhin kann eine Verdrehung des Stabmagneten gemäß DE 199 10 636 A1 im Laufe der Zeit dazu führen, dass keine exakte Messung mehr gegeben ist. Beispielsweise kann sich der Stabmagnet aus einer Befestigung im Laufe der Zeit lösen und entlang seiner Längsachse drehen. Ein weiterer Nachteil der Anordnung ist, dass der Stabmagnet mit der sich drehenden Magnetisierung kostenintensiv ist.

Die Aufgabe der vorliegenden Erfindung ist daher die Optimierung eines magnetischen Längenmesssystems im Vergleich zum Stand der Technik sowie das Bereitstellen eines entsprechenden Längenmessverfahrens und Herstellungsverfahrens eines magnetischen Bauteils eines Längenmesssystems.

Die obige Aufgabe wird gelöst durch ein magnetisches Bauteil für ein magnetisches Längenmesssystem gemäß Anspruch 1, ein Längenmesssystem gemäß Anspruch 8, ein Längenmessverfahren gemäß Anspruch 11 sowie ein Herstellungsverfahren eines magnetischen Bauteils gemäß Anspruch 12. Weitere vorteilhafte Ausführungsformen ergeben sich aus der nachfolgenden Beschreibung, den Zeichnungen sowie den abhängigen Ansprüchen.

Ein magnetisches Bauteil für ein magnetisches Längenmesssystem umfasst ein erstes wendelförmiges, magnetisch leitfähiges oder magnetisches Element mit einem ersten und einem zweiten axialen Ende sowie ein zweites wendelförmiges, magnetisch leitfähiges oder magnetisches Element mit einem ersten und einem zweiten axialen Ende, während das erste und das zweite magnetisch leitfähige oder magnetische Element entlang einer gemeinsamen Längsachse achssymmetrisch zueinander angeordnet sind, so dass zwischen dem ersten und dem zweiten magnetisch leitfähigen oder magnetischen Element ein magnetisches Feld ausbildbar ist, dessen Winkel sich in Bezug auf die gemeinsame Längsachse entlang einer vorgebbaren Länge kontinuierlich dreht.

Das magnetische Bauteil wird im magnetischen Längenmesssystem zusammen mit einem Magnetsensor verwendet, der zwischen dem ersten und dem zweiten magnetisch leitfähigen oder magnetischen Element geführt wird. Zwischen dem ersten und dem zweiten magnetisch leitfähigen oder magnetischen Element bildet sich idealisiert ein homogenes magnetisches Feld aus. Der Bereich zwischen dem ersten und dem zweiten magnetisch leitfähigen oder magnetischen Element wird im Folgenden auch als Inneres des magnetischen Bauteils bezeichnet.

Durch die Wendelförmigkeit der beiden Elemente dreht sich das magnetische Feld um die Längsachse des Inneren des magnetischen Bauteils, wenn es in Längsrichtung betrachtet wird. Das sich drehende magnetische Feld zwischen den beiden magnetisch leitfähigen oder magnetischen Elementen wird somit alleine aufgrund der Geometrie und der Anordnung der beiden Elemente erreicht. Die Wendelförmigkeit der Elemente sowie ihre Anordnung um die gemeinsame Längsachse haben weiterhin zur Folge, dass das magnetische Bauteil beispielsweise eine röhrenartige Bauform aufweist. Die beiden magnetischen Elemente sind also in einem vorgebbaren Abstand von der gemeinsamen Längsachse außen auf einer gedachten beispielsweise Röhrenform um die gemeinsame Längsachse angeordnet, wodurch sich das oben erwähnte Bauteilinnere ausbildet. Dies gilt mindestens für einen Bereich des Bauteils, in dem die magnetisch leitfähigen oder magnetischen Elemente wendelförmig oder in Form einer Helix vorliegen.

Eine genaue Ausgestaltung der beiden magnetisch leitfähigen oder magnetischen Elemente im Hinblick auf Breite, Dicke und Länge ist jeweils von den Gesamtproportionen des magnetischen Bauteils sowie der jeweiligen Anwendung abhängig. Insbesondere werden die Proportionen der beiden magnetisch leitfähigen oder magnetischen Elemente so gewählt, dass eine maximale Magnetfeldkonzentration zwischen den beiden Elementen erreicht wird. Beispielsweise erstrecken sich die beiden magnetisch leitfähigen oder magnetischen Elemente umfänglich über ein Viertel oder ein Drittel (90° oder 120°) des gedachten Kreisumfangs um die gemeinsame Längsachse. Eine Länge der beiden magnetisch leitfähigen oder magnetischen Elemente liegt beispielsweise zwischen 20 mm und 200 mm. Weiterhin sind die beiden magnetisch leitfähigen oder magnetischen Elemente aufeinander abgestimmt, weisen also vorzugsweise die gleiche Breite, die gleiche Länge und die gleiche Dicke auf, sind folglich also achssymmetrisch. Weiterhin verlaufen die beiden Elemente parallel zueinander. Insbesondere sind die beiden magnetisch leitfähigen oder magnetischen Elemente länglich ausgestaltet.

Neben der Wendelförmigkeit der magnetisch leitfähigen oder magnetischen Elemente können diese auch in einem Anfangs- oder einem Endbereich einen geraden Abschnitt aufweisen. Gerade bedeutet, dass die Elemente parallel zueinander sowie zur gemeinsamen Längsachse verlaufen. Dieser gerade Abschnitt befindet sich vorzugsweise an einem der axialen Enden. In diesem geraden Bereich können die Elemente weiterhin die Rundung des rohrförmigen Bauteils aufweisen oder sie können abgeflacht sein.

Die gemeinsame Längsachse ist bevorzugt eine Gerade. Allerdings kann die gemeinsame Längsachse auch eine krummlinige Längsachse sein. Auf diese Weise wird eine gebogene Form des magnetischen Bauteils erreicht, wenn dies für eine spezifische Anwendung erforderlich ist. In diesem Fall wird der Magnetsensor ebenfalls zwischen den beiden magnetischen Elementen geführt, allerdings entlang oder benachbart zu der krummlinigen Längsachse.

Ein Vorteil des magnetischen Bauteils gemäß der Erfindung ist, dass im Betrieb in einem Längenmesssystem der Magnetsensor in einem Inneren des Bauteils geführt wird. Auf diese Weise wird der Magnetsensor gegenüber äußeren Störmagnetfeldern wirksam abgeschirmt. Weiterhin befindet sich der Sensor in einem homogenen Magnetfeld, so dass er beliebig im Inneren angeordnet werden kann und nicht entlang der gemeinsamen Längsachse der magnetischen Elemente angeordnet werden muss. Darüber hinaus bleibt die magnetische Feldstärke über die Messlänge weitgehend konstant.

Weiterhin sind die Kosten des magnetischen Bauteils geringer, da keine drehende Magnetisierung wie im Stand der Technik erfolgt. Da die Drehung des Magnetfelds ausschließlich durch die Wendelförmigkeit der magnetisch leitfähigen oder magnetischen Elemente hervorgerufen wird, ermöglicht das magnetische Bauteil gemäß der Erfindung ein exaktes Messen aufgrund des homogenen Magnetfelds. Ebenso ist eine kostengünstigere Herstellung im Vergleich zum Stand der Technik realisierbar.

Als Nachteil der Anordnung im Vergleich zum Stand der Technik ist zu nennen, dass bei einem Betrieb in einem Längenmesssystem die doppelte Länge des Messweges für den Einbau erforderlich ist, sofern der Magnetsensor nicht mit einer flexiblen elektrischen Verbindung betrieben wird. Im Stand der Technik werden der magnetoresistive Winkelsensor und der Magnet parallel zueinander angeordnet. Die axiale Länge des Magneten entspricht ungefähr dem maximalen Messweg und dem maximal erforderlichen Platzbedarf in axialer Richtung. Gemäß der vorliegenden Erfindung wird der Magnetsensor allerdings im Inneren des magnetischen Bauteils angeordnet. In einem beispielhaften Extremfall befindet sich in einem ersten Zustand der Sensor am ersten axialen Ende des Bauteils. Nun ändert sich die Position des Bauteils und des Magnetsensors relativ zueinander und in einem zweiten Zustand befindet sich der Sensor am zweiten axialen Ende des Bauteils. Somit liegt in axialer Richtung ein größerer Platzbedarf vor. Dieser Platzbedarf beträgt beispielsweise das Doppelte der axialen Länge des magnetischen Bauteils.

In einer bevorzugten Ausführungsform ist das erste Ende des ersten magnetisch leitfähigen Elements und das erste Ende des zweiten magnetisch leitfähigen Elements mit einem Permanentmagneten verbunden. Bei den beiden magnetisch leitfähigen Elementen handelt es sich insbesondere um Polbleche. Die Polbleche bestehen vorzugsweise aus einem Eisenmaterial. Allerdings kann jedes magnetische Material verwendet werden, das nicht permanentmagnetisch ist.

Die ersten axialen Enden der beiden magnetisch leitfähigen Elemente sind benachbart zu dem Permanentmagneten angeordnet. Bei dem Permanentmagneten kann es sich beispielsweise um zwei einpolige Permanentmagneten handeln. Alternativ kann es sich auch um einen zweipoligen Permanentmagneten handeln, worauf später detaillierter eingegangen wird. Jeweils ein Pol des Permanentmagneten ist einem magnetisch leitfähigen Element zugeordnet, also einem Polblech.

Zwischen den beiden Polblechen und dem oder den Permanentmagneten kann ein Spalt vorhanden sein, wobei die Polbleche möglichst dicht an dem jeweiligen Permanentmagneten angeordnet sein sollen. Insbesondere sind die Polbleche an den Permanentmagneten geklebt oder mittels umspritzen daran angeordnet.

Der oder die Permanentmagneten können kreisrund oder quaderförmig sein. Ist der Permanentmagnet quaderförmig, dann weist das magnetisch leitfähige Element vorzugsweise den abgeflachten geraden Bereich auf, der oben beschrieben wurde. Eine Verbindung zwischen den Permanentmagneten und dem jeweiligen Polblech findet so statt, dass eine maximale Magnetfeldübertragung zwischen dem Permanentmagneten und den Polblechen stattfinden kann. Aus diesem Grund ist der Permanentmagnet benachbart zu dem jeweiligen Polblech angeordnet, beispielweise am ersten axialen Ende des Bauteils im Inneren des Bauteils.

In einer weiteren bevorzugten Ausführungsform ist der Permanentmagnet ein zweipoliger Permanentmagnet, während ein erster Pol des zweipoligen Permanentmagneten benachbart zu dem ersten axialen Ende des ersten magnetisch leitfähigen Elements und ein zweiter Pol des zweipoligen Permanentmagneten benachbart zu dem ersten axialen Ende des zweiten magnetisch leitfähigen Elements angeordnet ist. Der zweipolige Permanentmagnet kann, wie oben erwähnt, kreisrund oder quaderförmig sein. Der zweipolige Permanentmagnet besteht insbesondere aus einem ferromagnetischen Material und ist in die Öffnung am ersten axialen Ende eingesetzt oder teilweise darin angeordnet. Vorzugsweise schließt der Permanentmagnet bündig mit dem ersten axialen Ende des ersten und des zweiten magnetischen Elements ab. Alternativ kann der Permanentmagnet auch nur Außen benachbart zu dem ersten axialen Ende des magnetischen Bauteils angeordnet sein. Ein Vorteil dieser Anordnung ist, dass das Bauteil auf dieser Seite geschlossen ist und ein großes Volumen für den Permanentmagneten zur Verfügung steht.

In einer alternativen Ausführungsform sind das erste und das zweite magnetische Element zweipolig magnetisiert. Die zweipoligen Magnetelemente ermöglichen im Gegensatz zu der Verwendung von zwei Polblechen mit einem Permanentmagneten, dass das Bauteil an beiden Enden offen ist. Allerdings kann ein Ende des Bauteils mittels eines Kunststoffdeckels geschlossen sein. Alternativ zu dem Kunststoffdeckel kann jedes nicht magnetische Material zum Verschließen des Bauteils an seinem ersten axialen Ende verwendet werden. Die Formen und Anordnung dieses Deckels entsprechen denen, die oben für den Permanentmagneten beschrieben wurden. Da in dieser Anordnung kein Permanentmagnet an einem axialen Ende des Bauteils verwendet wird, treten in dieser Anordnung keine durch den Permanentmagneten verursachten Streufelder am ersten Ende des magnetischen Bauteils auf. Die Messung wird somit weiter präzisiert.

Weiterhin ist für das magnetische Bauteil bevorzugt, dass es ein nicht magnetisches Trägermaterial umfasst, an dem das erste und das zweite magnetisch leitfähige oder magnetische Element angeordnet ist. Für den Fall, dass das magnetische Bauteil an einem axialen Ende mittels eines Kunststoffdeckels oder eines Permanentmagneten oder auf eine andere Art und Weise verschlossen ist, können die Polbleche bzw. die Magnetelemente daran angeordnet sein. Zwischen oder neben den beiden magnetischen Elementen ist umfänglich dann kein weiteres Material erforderlich. Somit kann Luft umfänglich zwischen oder neben den beiden Elementen vorhanden sein.

In anderen Fällen befindet sich das nicht magnetische Trägermaterial zwischen oder neben den magnetisch leitfähigen oder magnetischen Elementen. Hierbei handelt es sich um ein nicht magnetisches Material, wie beispielsweise Aluminium. Bevorzugt ist als Trägermaterial jedoch ein Kunststoff. Auf diese Weise wird die mechanische Stabilität des magnetischen Bauteils weiter erhöht. Weiterhin kann der Deckel zum Abschluss des ersten Endes einstückig aus diesem Trägermaterial hergestellt sein. Das magnetische Bauteil ist daher topf- oder rohrförmig gestaltet.

In einer besonders vorteilhaften Ausführungsform sind das erste und das zweite magnetisch leitfähige oder magnetische Element einander gegenüberliegend achssymmetrisch angeordnet. Der umfängliche Abstand zwischen den beiden Elementen ist somit immer gleich und achssymmetrisch. Auf diese Weise kann eine besonders exakte Messung realisiert werden.

Weiterhin bevorzugt ist, dass das erste und das zweite magnetisch leitfähige oder magnetische Element entlang ihrer Länge zwischen 45° und 360°, insbesondere um ungefähr 180°, um die gemeinsame Längsachse verdreht sind. Der sogenannte Verdrehungswinkel hängt insbesondere von der Art des verwendeten Magnetsensors ab, worauf später im Detail eingegangen wird. Weiterhin hängt die Drehung von der Länge und der gewünschten Genauigkeit der Messung ab.

Ein Längenmesssystem umfasst ein erfindungsgemäßes magnetisches Bauteil sowie einen Magnetsensor, der zwischen dem ersten und dem zweiten wendelförmigen magnetisch leitfähigen oder magnetischen Element senkrecht zur gemeinsamen Längsachse des ersten und des zweiten magnetisch leitfähigen oder magnetischen Elements anordenbar ist und mit einer Auswerteeinheit verbunden ist, so dass das magnetische Bauteil und der Magnetsensor relativ zueinander bewegbar sind.

Wie bereits oben dargelegt, befindet sich der Magnetsensor in einem Inneren des magnetischen Bauteils. Das magnetische Bauteil und der Magnetsensor werden bei einer Messung relativ zueinander bewegt. Als Magnetsensor ist jeder Sensor geeignet, der eine Winkeländerung eines Magnetfelds erfassen kann.

Aufgrund des homogenen Felds im Inneren des magnetischen Bauteils ist eine Anordnung des Magnetsensors auf der gemeinsamen Längsachse der wendelförmigen magnetisch leitfähigen oder magnetischen Elemente nicht zwangsläufig erforderlich. Somit gibt es im Betrieb bei einer Abweichung des Magnetsensors von der gemeinsamen Längsachse der beiden Elemente keine Messfehler. Die Vorteile des erfindungsgemäßen Längenmesssystems ergeben sich aus den oben beschriebenen Vorteilen des erfindungsgemäßen magnetischen Bauteils.

In einer bevorzugten Ausführungsform sind der Magnetsensor und die Auswerteeinheit von einem nicht magnetischen Gehäusematerial mit einem Außendurchmesser umgeben, der kleiner ist als ein Innendurchmesser des magnetischen Bauteils. Insbesondere können der Magnetsensor und die Auswerteeinheit von einem nicht magnetischen Gehäusematerial umgossen sein. Hierbei kann es sich beispielsweise um Kunststoff handeln.

Es ist weiterhin vorteilhaft, wenn der Magnetsensor die Auswerteeinheit sowie die verwendeten elektrischen Leitungen aus einem nicht magnetischen Material hergestellt wurden. Auf diese Weise kann eine Verfälschung der Messung aufgrund von Störfeldern minimiert werden.

Der Durchmesser des den Magnetsensor und die Auswerteeinheit umgebenden Gehäusematerials kann so gewählt sein, dass ein vorgebbarer Spalt zwischen dem Außendurchmesser des den Magnetsensor umhüllenden Gehäusematerials und dem Innendurchmesser des rohrförmigen Bauteils vorhanden ist. Wie oben dargelegt ist insbesondere aufgrund des homogenen Magnetfelds im Inneren des Bauteils eine exakte Führung entlang der gemeinsamen Längsachse der Elemente nicht zwingend erforderlich, wenn auch wünschenswert. Weiterhin gewährleistet die Umhüllung des Magnetsensors und der Auswerteeinheit eine höhere mechanische Stabilität der Magnetsensoranordnung.

In einer besonders bevorzugten Ausführungsform ist der Magnetsensor ein magnetoresistiver Winkelsensor, insbesondere ein anisotroper magnetoresistiver Winkelsensor (AMR-Winkelsensor) oder ein riesen magnetoresistiver Winkelsensor (GMR-Winkelsensor), oder ein 2D-Hall-Sensor. Insbesondere bei der Verwendung eines AMR-Winkelsensors beträgt die Verdrehung der beiden magnetisch leitfähigen oder magnetischen Elemente entlang der gemeinsamen Längsachse maximal ungefähr 180°. Ungefähr bedeutet hier, dass die Verdrehung insbesondere so gewählt ist, dass der Magnetsensor in einem späteren Messverfahren eine tatsächliche Winkelverdrehung von 180° erfassen kann. Somit kann sich eine tatsächliche Verdrehung der beiden magnetisch leitfähigen oder magnetischen Elemente um ungefähr 200° ergeben kann, da der Magnetsensor nicht exakt von Anfang bis Ende messen kann. In diesem Beispiel sind die ersten und die letzten 10° Verdrehung mit dem Magnetsensor nicht sinnvoll erfassbar, insbesondere aufgrund eines benachbart zu dem ersten axialen Ende angeordneten Permanentmagneten. Die erhöhte tatsächliche Verdrehung kann sich auch aufgrund von Kalibriervorgängen ergeben. Alternativ beträgt die tatsächliche Verdrehung beispielsweise 180°, während die Verdrehung nur in einem Bereich zwischen 10° und 170° gemessen wird. Somit ist allerdings der Messbereich der zur Verfügung stehende Wegstrecke bei unveränderter Länge des Bauteils verringert.

Bei einem GMR-Winkelsensor kann die Verdrehung der beiden magnetisch leitfähigen oder magnetischen Elemente, im Gegensatz zu einem AMR-Winkelsensor, ungefähr 360° betragen. Auch hier kann die tatsächliche Verdrehung bei 380° liegen, um eine maximal erfassbare Verdrehung von 360° zu erhalten.

Ein Längenmessverfahren mit einem erfindungsgemäßen Längenmesssystem umfasst die Schritte: Bewegen des magnetischen Bauteils und des Magnetsensors relativ zueinander, Erfassen einer Magnetfeldwinkeländerung mittels des Magnetsensors zwischen dem ersten und dem zweiten wendelförmigen magnetisch leitfähigen oder magnetischen Element und Auswerten der erfassten Magnetfeldwinkeländerung in ein Wegsignal. Das erfindungsgemäße Längenmessverfahren weist die Vorteile des oben beschriebenen magnetischen Bauteils sowie des oben beschriebenen Längenmesssystems auf. Der Magnetsensor wird im Inneren des magnetischen Bauteils angeordnet und es findet dort eine Relativbewegung des Bauteils zu dem Magnetsensor statt. Aufgrund dieser Anordnung ist, wie bereits oben dargelegt, die doppelte Weglänge für die Messvorrichtung erforderlich, sofern keine flexible elektrische Verbindung aufweist.

Besonders bevorzugt ist, wenn das magnetische Bauteil bewegt wird, während der Magnetsensor mit der Auswerteeinheit stationär angeordnet ist. In diesem Fall können die elektrischen Leitungen des Magnetsensors und der Auswerteeinheit fest angeordnet sein und müssen nicht flexibel ausgestaltet sein. Dies vereinfacht den Aufbau der Anordnung. Mittels des Magnetsensors wird eine Magnetfelddrehung erfasst, wie oben beschrieben. Hierbei handelt es sich insbesondere um eine zentrische Winkeländerung des Magnetfelds. Der Magnetsensor übermittelt elektrische Signale an die Auswerteeinheit, die aus den Signalen mindestens eine Winkeldrehung ermitteln kann, vorzugsweise einen Absolutwinkel.

Ein Herstellungsverfahren eines erfindungsgemäßen magnetischen Bauteils weist die Schritte auf: Bereitstellen eines ersten und eines zweiten wendelförmigen und magnetisch leitfähigen oder magnetisierbaren Elements mit einem ersten und einem zweiten axialen Ende und Anordnen des ersten und des zweiten magnetisch leitfähigen oder magnetisierbaren Elements parallel zueinander entlang einer gemeinsamen Längsachse, so dass zwischen dem ersten und dem zweiten magnetisch leitfähigen oder magnetisierbaren Element ein magnetisches Feld ausbildbar ist, dessen Winkel sich in Bezug auf die gemeinsame Längsachse entlang einer vorgebbaren Länge kontinuierlich dreht.

Mit dem Herstellungsverfahren ist das erfindungsgemäße magnetische Bauteil herstellbar, das die oben erwähnten Vorteile aufweist. Ein Bereitstellen der magnetisch leitfähigen oder magnetisierbaren Elemente kann im Falle eines anfänglichen Bandmaterials mittels Prägen erfolgen. Die Grundgeometrie der magnetisch leitfähigen oder magnetisierbaren Elemente ist vorher beispielsweise ausgestanzt worden. Bei der Herstellung der magnetisch leitfähigen oder magnetisierbaren Elemente aus einem Rohr kann dies mittels Ausfräsen, Lasern oder Ausstanzen erfolgen. Bei der Verwendung von Polblechen wird jeweils das gleiche Element hergestellt.

Bei der Verwendung von zwei Magnetelementen können auch zwei gleiche Magnetelemente hergestellt werden, diese werden allerdings unterschiedlich gepolt magnetisiert, da bei der späteren Verwendung jeweils zwei unterschiedliche Pole in Richtung der gemeinsamen Längsachse zeigen müssen. Dies ist insbesondere bei der Verwendung von zweipoligen Magnetelementen erforderlich.

In einer bevorzugten Ausführungsform erfolgt das Bereitstellen des ersten und des zweiten magnetisierbaren oder magnetischen Elements daher mittels Prägen, Stanzen, Spritzgießen oder Laserschneiden.

Weiterhin vorteilhaft ist, wenn das erste und das zweite magnetisch leitfähige oder magnetisierbare Element aus kunststoffgebundenem Ferritmaterial im Spritzgussverfahren geformt wird. Alternativ kann das ersten und das zweite magnetisch leitfähige oder magnetisierbare Element aus Hartferrit in einem Sinterverfahren geformt werden.

Weiterhin bevorzugt ist, dass, wenn das erste und das zweite Element magnetisch leitfähige Elemente sind, das Herstellungsverfahren den Schritt umfasst: Anordnen eines Permanentmagneten benachbart zum ersten axialen Ende des ersten und des zweiten magnetisch leitfähigen Elements, wobei das erste und das zweite magnetisch leitfähige Element ein erstes und ein zweites Polblech sind. Auf diese Weise ist die oben beschriebene erste Ausführungsform mit zwei Polblechen und zwei einpoligen oder einem zweipoligen Permanentmagnet realisierbar. Das Anordnen der Polbleche an dem Permanentmagneten kann mittels Kleben oder Umspritzen erfolgen.

In einer weiterhin bevorzugten Ausführungsform umfasst das Herstellungsverfahren den weiteren Schritt: Anordnen des ersten und des zweiten magnetisch leitfähigen oder magnetisierbaren Elements an einem nicht magnetischen Trägermaterial. Auf diese Weise wird das Bauteil umfänglich geschlossen, wodurch eine mechanische Stabilität des Bauteils erhöht wird. Die magnetisch leitfähigen oder magnetisierbaren Elemente können mit Kunststoff umspritzt werden, in ein Kunststoffrohr eingeklebt werden oder reingeclipst werden. Wird ein Permanentmagnet verwendet, dann kann dieser ebenfalls mit umspritzt werden, so dass ein Kleben der Polbleche an jeweils einen Pol des Permanentmagneten nicht zusätzlich erforderlich ist, jedoch trotzdem ausgeführt werden kann.

Im Folgenden wird die vorliegende Erfindung anhand von Ausführungsbeispielen detailliert unter Bezugnahme auf die begleitenden Zeichnungen beschrieben. Gleiche Bezugszeichen in den Zeichnungen bezeichnen jeweils gleiche Elemente oder Bauteile. Es zeigen:
- Fig. 1: eine schematische Darstellung eines erfindungsgemäßen magnetischen Längenmesssystems,
- Fig. 2: eine weitere Ausführungsform eines erfindungsgemäßen magnetischen Längenmesssystems,
- Fig. 3: eine schematische Darstellung eines Verfahrensablaufs eines erfindungsgemäßen Längenmessverfahrens,
- Fig. 4: eine graphische Kennlinie der gemessenen magnetischen Winkeldrehung über den relativen Weg,
- Fig. 5: eine graphische Kennlinie des Signalausgangs des Sensors über den relativen Weg und
- Fig. 6: ein erfindungsgemäßes Herstellungsverfahren eines magnetischen Bauteils für ein magnetisches Längenmesssystem.

Das magnetische Längenmesssystem wird zur linearen Wegmessung verwendet. Beispielsweise kann die lineare Wegmessung für Kraftfahrzeuge beispielsweise zur Messung des Einfederungswegs zwischen Karosserie und Fahrgestell oder Rad verwendet werden. Weiterhin lassen sich die Positionen von linearen Aktoren bestimmen.

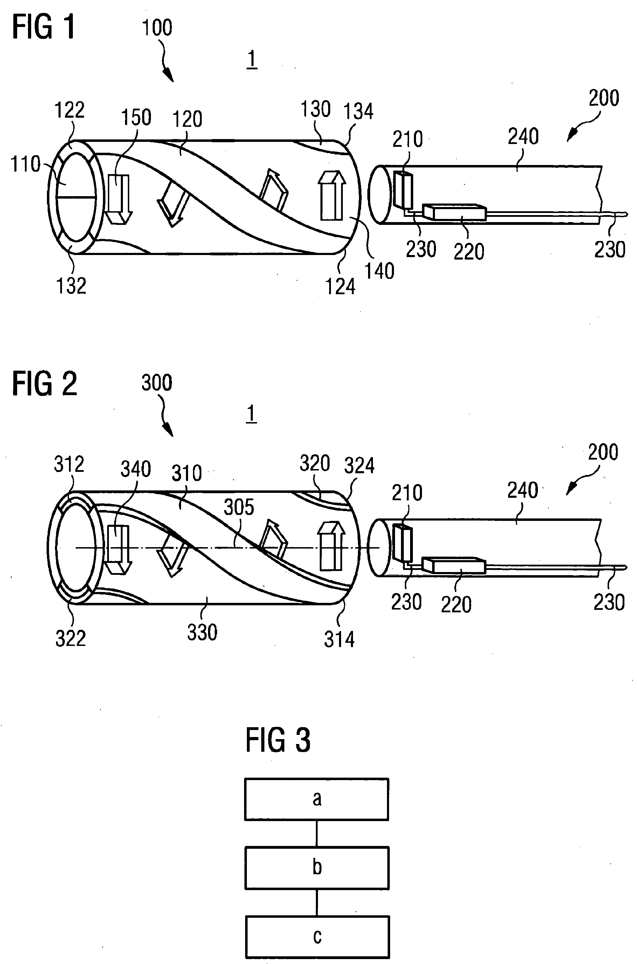

Bezug nehmend auf Fig. 1 ist eine erste Ausführungsform des erfindungsgemäßen Längenmesssystems 1 dargestellt. Das Längenmesssystem 1 besteht aus einem magnetischen Bauteil 100 sowie einer Magnetsensoranordnung 200.

Das magnetische Bauteil 100 umfasst einen Permanentmagneten 110 sowie ein erstes magnetisch leitfähiges Element in Form eines ersten Polblechs 120 und ein zweites magnetisch leitfähiges Element in Form eines zweiten Polblechs 130. Die beiden Polbleche 120 und 130 sind wendelförmig, länglich und weisen ein erstes axiales Ende 122, 132 sowie in zweites axiales Ende 124, 134 auf. Die Polbleche 120, 130 sind aus einem magnetisch gut leitfähigen Material hergestellt, das nicht permanentmagnetisch ist.

Der Permanentmagnet 110 ist ein zweipoliger, kreisförmiger Permanentmagnet. Gemäß der Darstellung in Fig. 1 befindet sich ein erster Pol in der oberen Hälfte und ein zweiter Pol in der unteren Hälfte des Permanentmagneten 110. Mittig an der ersten Polhälfte ist das erste Polblech 120 an dem Permanentmagneten angeordnet, beispielsweise mittels Kleben. Entsprechend ist mittig an dem zweiten Pol das zweite Polblech 130 angeordnet. Auf diese Weise stehen sich die beiden Polbleche 120, 130 genau gegenüber. Die beiden Polbleche 120, 130 weisen eine Breite von ungefähr zwischen einem Viertel und einem Drittel des Kreisumfangs ein, also zwischen 90° und 120° des Kreisumfangs.

Somit weist jedes Polblech einen Pol auf bzw. repräsentiert diesen. Zwischen den beiden Polblechen 120, 130 bildet sich ein Magnetfeld aus. Aufgrund der Wendelförmigkeit der Polbleche 120, 130 dreht sich das Magnetfeld entlang einer Länge des Bauteils 100 wie durch die Pfeile 150 dargestellt.

Umfänglich zwischen den Polblechen 120, 130 ist ein nicht magnetisches Trägermaterial 140 angeordnet, das im Folgenden als Füllmaterial 140 bezeichnet wird. Das Füllmaterial 140 ist beispielsweise ein Kunststoff kann allerdings jedes nicht magnetisches Material sein. Gemäß der Darstellung in Fig. 1 weist das Füllmaterial 140 mindestens eine Dicke auf, die der Dicke der Polbleche 120, 130 entspricht. Weiterhin erstreckt sich das Füllmaterial 140 entlang der Länge des Bauteils 100, so dass das Füllmaterial 140 bündig mit den ersten axialen Ende 122, 132 sowie mit den zweiten axialen Enden 124, 134 der beiden Polbleche 120, 130 abschließt.

Der Permanentmagnet 110 verschließt in der Darstellung gemäß Fig. 1 die Öffnung des Bauteils 100 an dem ersten axialen Ende und schließt bündig mit dem Ende der Polbleche 120, 130 ab. Eine Dicke des Permanentmagneten 110 kann seinem Durchmesser entsprechen oder kleiner sein. Am zweiten axialen Ende ist das magnetische Bauteil 100 offen, so dass eine Magnetsensoranordnung 200 eintauchen kann, wie weiter unten beschrieben.

Die Magnetsensoranordnung 200 umfasst einen Magnetsensor 210, eine Auswerteeinheit 220 sowie elektrische Leitungen 230. Der Magnetsensor 210 ist senkrecht zu einer Längsachse des Bauteils 100 angeordnet. Sowohl der Magnetsensor 210 als auch die Auswerteeinheit 220 sind von einem elektrisch isolierenden Gehäusematerial 240 umgeben, beispielsweise umgossen. Bei dem Gehäusematerial handelt es sich ebenfalls vorzugsweise um ein nicht magnetisches Material 240, beispielsweise Kunststoff. Das Gehäusematerial 240 weist eine äußere Form auf, die in das Innere des Bauteils 100 passt. Beispielsweise ist das Gehäusematerial 240 zylindrisch, wenn das Bauteil 100 rohrförmig ist. Ebenso wurden für den Magnetsensor 210, die Auswerteeinheit 220 und die elektrischen Leitungen 230 nicht magnetische Materialien verwendet. Auf diese kann eine Messgenauigkeit des Längenmesssystems 1 verbessert werden.

Der Durchmesser des rohrförmigen Gehäusematerials 240 der Sensoranordnung 200 entspricht maximal einem Innendurchmesser des Bauteils 100. Auf diese Weise ist die Magnetsensoranordnung 200 in dem Inneren des Bauteils 100 anordenbar und die beiden Bauteile 100, 200 sind relativ zueinander verschiebbar.

Fig. 2 zeigt eine alternative Ausführungsform des Längenmesssystems. Hierin entspricht die Magnetsensoranordnung 200 der Magnetsensoranordnung 200 aus Fig. 1. Daher wird diese im Folgenden nicht erneut näher erläutert.

Das magnetische Bauteil 300 besteht aus zwei zweipolig magnetisierten Magnetelementen 310, 320, also aus zwei magnetischen Elementen. Beide zweipolig magnetisierten Magnetelemente 310, 320 weisen ein erstes axiales Ende 312, 322 sowie ein zweites axiales Ende 314, 324 auf. Die einander zugewandten Seiten der beiden Magnetelemente 310, 320 weisen den jeweils komplementären Pol auf. Auf diese Weise bildet sich erneut, wie bereits für Fig. 1 beschrieben, ein sich drehendes Magnetfeld zwischen den Magnetelementen 310, 320 aus. Dies ist durch die Pfeile 350 dargestellt. Umfänglich zwischen den Magnetelementen 310, 320 ist ein nicht magnetisches Trägermaterial 330 angeordnet, dass im Folgenden als Füllmaterial 330 bezeichnet wird. Die Eigenschaften des Füllmaterials 330 entsprechen denen des Füllmaterials 140 aus Fig. 1. Ebenfalls entspricht die Geometrie der Magnetelemente 310, 320 denen der Polbleche 120, 130 und die Geometrie des Füllmaterials 330 entspricht der des Füllmaterials 140.

Das erste axiale Ende des Bauteils 300 kann offen sein oder es kann mittels eines Kunststoffdeckels oder eines Deckels aus einem anderen nicht magnetischen Material verschlossen sein. Ebenfalls kann das erste axiale Ende des Bauteils 300 mit dem Füllmaterial 330 einstückig verschlossen sein, so dass sich eine Topfform für das Bauteil 300 ergibt. Die Geometrie des Deckels entspricht vorzugsweise der für den Permanentmagneten 110 beschriebenen Geometrie aus Fig. 1.

Nun Bezug nehmend auf Fig. 3 wird das erfindungsgemäße Längenmessverfahren erläutert. In einem Schritt a werden das magnetische Bauteil 100, 300 und der Magnetsensor 210 relativ zueinander bewegt. Der Magnetsensor 210 erfasst in Schritt b eine Magnetfeldwinkeländerung zwischen dem ersten und dem zweiten wendelförmigen magnetisch leitfähigen oder magnetischen Element 120, 130; 310, 320. Ein Auswerten der erfassten Magnetfeldwinkeländerung in ein Wegsignal erfolgt in Schritt c. In Abhängigkeit von der maximalen Verdrehung der magnetisch leitfähigen oder magnetischen Elemente zueinander können unterschiedliche Magnetsensoren verwendet werden. Beispielsweise wird bei einer Verdrehung um 180°, wie sie in den Figuren 1 und 2 dargestellt ist, ein anisotroper magnetoresistiver Winkelsensor verwendet. Bei einer Verdrehung um 360° wird vorzugsweise ein GMR-Winkelsensor verwendet. Alternativ zu diesen beiden Sensoren kann auch ein 2D-Hall-Sensor oder ein anderer magnetisch empfindlicher Sensor verwendet werden. Wichtig bei den verwendeten Magnetsensoren ist lediglich, dass sie eine Änderung des Magnetfelds, vorzugsweise eine Winkeländerung, erfassen können.

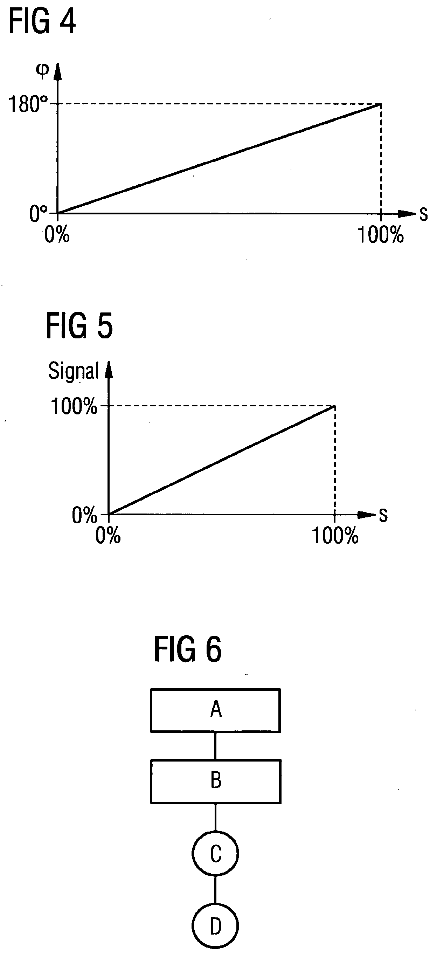

Fig. 4 zeigt die Änderung des Magnetfeldwinkels ϕ in Abhängigkeit von der relativen Weglänge s. Hierbei ist ein Idealzustand dargestellt. Ausgehend von einem der beiden axialen Enden beträgt der Winkel des Magnetfelds 0° und die zurückgelegte Weglänge 0 %. Ändert sich die Position des Magnetsensors 210 im Inneren des magnetischen Bauteils 100; 300, ändert sich auch der Winkel des Magnetfelds. In den gezeigten Beispielen geht dies bis maximal 180°. Somit entspricht ein Winkel von 180° der maximalen zurückgelegten Weglänge von 100 %. Wird eine Verdrehung von 360° bei einem GMR-Winkelsensor verwendet, dann entspricht der Magnetfeldwinkel von 360° der Weglänge 100 %. Eine beispielhafte Weglänge liegt zwischen 50 und 100 mm.

Fig. 5 zeigt die Relation der vom Magnetsensor 210 ausgegebenen Signale über die Weglänge s. Zwischen der zurückgelegten relativen Weglänge s und dem vom Magnetsensor 210 ausgegebenen Signal liegt demnach ein linearer Zusammenhang vor. Eine zurückgelegte Weglänge von 0 % entspricht somit einem Signal von 0 %, während eine zurückgelegte Weglänge von 100 % einem ausgegebenen Signal von 100 % entspricht. In Abhängigkeit von der erforderlichen Genauigkeit der Messung oder einem Kalibriervorgang kann, Bezug nehmend auf die Fig. 1, 2, 4 und 5 allerdings ein Signal von 0 % einem Verdrehungswinkel von 10° entsprechen. Ebenso kann ein Signal von 100 % einem Verdrehungswinkel von 170° entsprechen. Alternativ dazu kann auch der tatsächliche Verdrehungswinkel der magnetisch leitfähigen oder magnetischen Elemente 120, 130; 310, 320 anstatt 180° 200° betragen. Unter Berücksichtigung der gerade genannten 10°, um die die Messung verkürzt wird, ergibt sich ein messbarer Winkelbereich von 180°. Auf diese Weise kann bei Verwendung eines AMR-Winkelsensors ein maximaler Erfassungsbereich des Sensors optimal ausgenutzt werden.

Nun Bezug nehmend auf Fig. 6 ist ein erfindungsgemäßes Herstellungsverfahren eines erfindungsgemäßen magnetischen Bauteils dargestellt. In einem Schritt A werden ein erstes und ein zweites längliches, wendelförmiges magnetisch leitfähiges oder magnetisierbares Element mit einem ersten und einem zweiten axialen Ende bereitgestellt. Das Bereitstellen kann ausgehend von einem Bandmaterial mittels Stanzen und anschließendem Prägen erfolgen. Bei den magnetisch leitfähigen Elementen handelt es sich um Polbleche, so dass jeweils zwei gleiche Elemente hergestellt werden können.

Bei den magnetisierbaren Elementen müssen zwei unterschiedliche Magnetisierungen für die beiden Elemente hergestellt werden, da sich jeweils die beiden komplementären Pole gegenüberstehen. In beiden Fällen kann alternativ zu der Verwendung von Bandmaterial eine Röhre verwendet werden, aus der die jeweiligen Elemente ausgestanzt, ausgefräst oder herausgelasert werden. Eine weitere Herstellung kann über ein Formpressen und anschließenden Sinterprozess erfolgen.

In Schritt B werden die beiden Elemente achssymmetrisch zueinander entlang einer gemeinsamen Längsachse angeordnet. Somit ist zwischen dem ersten und dem zweiten Element ein magnetisches Feld ausbildbar, dessen Winkel sich in Bezug auf die gemeinsame Längsachse entlang einer vorgebbaren Länge kontinuierlich ändert bzw. dreht.

Handelt es sich bei den beiden Elementen um magnetisch leitfähige Elemente, also um Polbleche, dann erfolgt in Schritt C das Anordnen eines Permanentmagneten benachbart zu den ersten axialen Enden der beiden Elemente. Die Form des Permanentmagneten wurde eingangs unter Bezugnahme auf Fig. 1 beschrieben. Ist in Schritt B kein Umspritzen der Polbleche erfolgt, dann kann dies in Schritt C gemeinsam mit dem Permanentmagneten erfolgen, so dass die Polbleche nicht gesondert an den Permanentmagneten geklebt werden müssen. Die Reihenfolge der obigen Schritte ist exemplarisch und kann getauscht werden.

Bei Verwendung von Magnetelementen in Schritt B kann anstelle des Permanentmagneten in Schritt C ein Kunststoffdeckel oder ein Deckel aus einem nicht magnetischen Material an den ersten axialen Enden der beiden Magnetelemente angeordnet werden. Dies kann beispielsweise mittels Ankleben oder Umspritzen erfolgen. Auf diese Weise wird eine topfförmige Bauform des magnetischen Bauteils erreicht.

In Schritt D werden die beiden Elemente an einem nicht magnetischen Trägermaterial angeordnet. Insbesondere wird ein Füllmaterial umfänglich zwischen den Elementen angeordnet, so dass das magnetische Bauteil eine erhöhte mechanische Stabilität erfährt. Auf die Art und die Ausgestaltung des Füllmaterials wurde bereits ausführlich bei der Beschreibung der Figuren 1 und 2 eingegangen, so dass dies an dieser Stelle ebenfalls nicht wiederholt wird.

## Patentansprüche

1. Magnetisches Bauteil (100; 300) für ein magnetisches Längenmesssystem (1), umfassend:
a) ein erstes wendelförmiges, magnetisch leitfähiges oder magnetisches Element (120; 310) mit einem ersten (122; 312) und einem zweiten axialen Ende (124; 314) sowie
b) ein zweites wendelförmiges, magnetisch leitfähiges oder magnetisches Element (130; 320) mit einem ersten (132; 322) und einem zweiten axialen Ende (134; 324), während
c) das erste (120; 310) und das zweite magnetisch leitfähige oder magnetische Element (130; 320) entlang einer gemeinsamen Längsachse (305) achssymmetrisch zueinander angeordnet sind, so dass
d) zwischen dem ersten (120; 310) und dem zweiten magnetisch leitfähigen oder magnetischen Element (130; 320) ein magnetisches Feld ausbildbar ist, dessen Winkel sich in Bezug auf die gemeinsame Längsachse (305) entlang einer vorgebbaren Länge kontinuierlich dreht,
**dadurch gekennzeichnet, dass**
das erste magnetisch leitfähige Element in Form eines ersten Polbleches (120) und das zweite magnetisch leitfähige Element in Form eines zweiten Polbleches (130) ausgebildet sind, wobei die Polbleche (120; 130) aus einem magnetisch gut leitfähigen Material hergestellt sind, das nicht permanentmagnetisch ist,
wobei die Polbleche (120; 130) wendelförmig und länglich sind und eine erstes axiales Ende sowie ein zweites axiales Ende (122; 132) aufweisen und
wobei ein zweipoliger, kreisförmiger Permanentmagnet (110) die Öffnung des Bauteiles an dem ersten axialen Ende (122; 132) verschließt und bündig mit dem Ende der Polbleche (120; 130) abschließt und
das magnetische Bauteil (110) am zweiten axialen Ende (124; 134) offen ist, so dass eine Magnetsensoranordnung (200) eintauchen kann.

2. Bauteil (100) gemäß Anspruch 1, während das erste Ende (122) des ersten magnetisch leitfähigen Elements (120) und das erste Ende (132) des zweiten magnetisch leitfähigen Elements (130) mit einem Permanentmagneten (110) verbunden sind.

3. Bauteil (100) gemäß Anspruch 2, während der Permanentmagnet (110) ein zweipolig magnetisierter Permanentmagnet (110) ist, während ein erster Pol des zweipolig magnetisierten Permanentmagneten (110) benachbart zu dem ersten axialen Ende (122) des ersten magnetisch leitfähigen Elements (120) und ein zweiter Pol des zweipolig magnetisierten Permanentmagneten (110) benachbart zu dem ersten axialen Ende (132) des zweiten magnetisch leitfähigen Elements (130) angeordnet ist.

4. Bauteil (300) gemäß Anspruch 1, während das erste (310) und das zweite magnetische Element (320) zweipolig magnetisiert sind.

5. Bauteil (100; 300) gemäß einem der vorhergehenden Ansprüche, während das erste (120; 310) und das zweite magnetisch leitfähige oder magnetische Element (130; 320) an einem nicht magnetischen Trägermaterial (140; 330) angeordnet sind.

6. Bauteil (100; 300) gemäß einem der vorhergehenden Ansprüche, während das erste (120; 310) und das zweite magnetisch leitfähige oder magnetische Element (130; 320) einander gegenüberliegend achssymmetrisch angeordnet sind.

7. Bauteil (100; 300) gemäß einem der vorhergehenden Ansprüche, während das erste (120; 310) und das zweite magnetisch leitfähige oder magnetische Element (130; 320) entlang ihrer Länge zwischen 45° und 360°, insbesondere um ungefähr 180°, um die gemeinsame Längsachse (305) verdreht sind.

8. Längenmesssystem (1), umfassend:
a) ein magnetisches Bauteil (100; 300) gemäß einem der Ansprüche 1 bis 7 sowie
b) einen Magnetsensor (210), der zwischen dem ersten (120; 310) und dem zweiten wendelförmigen magnetisch leitfähigen oder magnetischen Element (130; 320) senkrecht zur gemeinsamen Längsachse (305) des ersten (120; 310) und des zweiten magnetisch leitfähigen oder magnetischen Elements (130; 320) anordenbar ist und mit einer Auswerteeinheit (220) verbunden ist, so dass das magnetische Bauteil (100; 300) und der Magnetsensor (210) relativ zueinander bewegbar sind.

9. Längenmesssystem (1) gemäß Anspruch 8, während der Magnetsensor (210) und die Auswerteeinheit (220) von einem nicht magnetischen Gehäusematerial (240) mit einem Außendurchmesser umgeben sind, der kleiner ist als ein Innendurchmesser des magnetischen Bauteils (100; 300).

10. Längenmesssystem (1) gemäß einem der Ansprüche 8 bis 9, während der Magnetsensor (210) ein magnetoresistiver Winkelsensor, insbesondere ein anisotroper magnetoresistiver Winkelsensor (AMR-Winkelsensor) oder ein GMR-Winkelsensor, oder ein 2D-Hall-Sensor ist.

11. Längenmessverfahren mit einem Längenmesssystem (1) gemäß einem der Ansprüche 8 bis 10, umfassend die Schritte:
a) Bewegen (a) des magnetischen Bauteils (100; 300) und des Magnetsensor (210) relativ zueinander,
b) Erfassen (b) einer Magnetfeldwinkeländerung mittels des Magnetsensors (210) zwischen dem ersten (120; 310) und dem zweiten wendelförmigen magnetisch leitfähigen oder magnetischen Element (130; 320) und
c) Auswerten (c) der erfassten Magnetfeldwinkeländerung in ein Wegsignal.

12. Herstellungsverfahren eines magnetischen Bauteils (100; 300) gemäß einem der Ansprüche 1 bis 7, das die Schritte aufweist:
a) Bereitstellen (A) eines ersten (120; 310) und eines zweiten wendelförmigen und magnetisch leitfähigen oder magnetisierbaren Elements (130; 320) mit einem ersten (122, 132; 312, 322) und einem zweiten axialen Ende (124, 134; 314, 324) und
b) Anordnen (B) des ersten (120; 310) und des zweiten magnetisch leitfähigen oder magnetisierbaren Elements (130; 320) parallel zueinander entlang einer gemeinsamen Längsachse (305), so dass zwischen dem ersten (120; 310) und dem zweiten magnetisch leitfähigen oder magnetisierbaren Element (130; 320) ein magnetisches Feld ausbildbar ist, dessen Winkel sich in Bezug auf die gemeinsame Längsachse (305) entlang einer vorgebbaren Länge kontinuierlich dreht.

13. Herstellungsverfahren gemäß Anspruch 12, während das Bereitstellen des ersten (120; 310) und des zweiten magnetisch leitfähigen oder magnetisierbaren Elements (130; 320) mittels Prägen, Stanzen, Spritzgießen oder Laserschneiden erfolgt.

14. Herstellungsverfahren gemäß Anspruch 12, während das erste (120; 310) und das zweite magnetisch leitfähige oder magnetisierbare Element (130; 320) aus kunststoffgebundenem Ferritmaterial im Spritzgussverfahren geformt werden.

15. Herstellungsverfahren gemäß Anspruch 12, während das erste (120; 310) und das zweite magnetisch leitfähige oder magnetisierbare Element (130; 320) aus Hartferrit in einem Sinterverfahren geformt werden.

16. Herstellungsverfahren gemäß einem der Ansprüche 12 bis 15, während das erste (120) und das zweite Element (130) magnetisch leitfähige Elemente (120, 130) sind, wobei das Herstellungsverfahren den weiteren Schritt umfasst:
c) Anordnen (C) eines Permanentmagneten (110) benachbart zum ersten axialen Ende (122, 132) des ersten (120) und des zweiten magnetisch leitfähigen Elements (130), wobei das erste (120) und das zweite magnetisch leitfähige Element (130) ein erstes und ein zweites Polblech sind.

17. Herstellungsverfahren gemäß einem der Ansprüche 12 bis 16, das den weiteren Schritt aufweist:
d) Anordnen (D) des ersten (120; 310) und des zweiten magnetisch leitfähigen oder magnetisierbaren Elements (130; 320) an einem nicht magnetischen Trägermaterial (140; 330).

## Claims

1. Magnetic component (100; 300) for a magnetic length measuring system (1), comprising:
a) a first helical, magnetically conductive or magnetic element (120; 310) with a first (122; 312) and a second axial end (124; 314) and
b) a second helical, magnetically conductive or magnetic element (130; 320) with a first (132; 322) and a second axial end (134; 324), whereas
c) the first (120; 310) and the second magnetically conductive or magnetic elements (130; 320) are arranged in an axially symmetric manner relative to each other along a common longitudinal axis (305) such that
d) a magnetic field can be formed between the first (120; 310) and the second magnetically conductive or magnetic elements (130; 320), the angle of said magnetic field relative to the common longitudinal axis (305) continuously rotating along a predeterminable length,
**characterized in that**
the first magnetically conductive element is embodied in the form of a first pole lamination (120) and the second magnetically conductive element is embodied in the form of a second pole lamination (130), wherein the pole laminations (120; 130) are produced from a material with good magnetic-conductive properties but without permanentmagnetic properties,
wherein the pole laminations (120; 130) are helical and elongate and they have a first axial end and a second axial end (122; 132) and
wherein a circular permanent magnet (110) having two poles closes the opening of the component at the first axial end (122; 132) and terminates flush with the end of the pole laminations (120; 130) and
the magnetic component (110) is open at the second axial end (124; 134) such that a magnetic sensor arrangement (200) can be immersed therein.

2. Component (100) according to Claim 1, whereas the first end (122) of the first magnetically conductive element (120) and the first end (132) of the second magnetically conductive element (130) are connected by a permanent magnet (110).

3. Component (100) according to Claim 2, whereas the permanent magnet (110) is a permanent magnet (110) magnetized so as to have two poles, whereas a first pole of the permanent magnet (110) magnetized so as to have two poles is arranged adjacent to the first axial end (122) of the first magnetically conductive element (120) and a second pole of the permanent magnet (110) magnetized so as to have two poles is arranged adjacent to the first axial end (132) of the second magnetically conductive element (130).

4. Component (300) according to Claim 1, whereas the first (310) and the second magnetic elements (320) are magnetized so as to have two poles.

5. Component (100; 300) according to one of the preceding claims, whereas the first (120; 310) and the second magnetically conductive or magnetic elements (130; 320) are arranged on a non-magnetic substrate (140; 330).

6. Component (100; 300) according to one of the preceding claims, whereas the first (120; 310) and the second magnetically conductive or magnetic elements (130; 320) are arranged opposite each other in an axially symmetrical manner.

7. Component (100; 300) according to one of the preceding claims, whereas the first (120; 310) and the second magnetically conductive or magnetic elements (130; 320) are along the length thereof twisted by between 45° and 360°, in particular by approximately 180°, about the common longitudinal axis (305).

8. Length measuring system (1), comprising
a) a magnetic component (100; 300) according to one of Claims 1 to 7, and
b) a magnetic sensor (210), which can be arranged between the first (120; 310) and the second helical magnetically conductive or magnetic elements (130; 320), perpendicular to the common longitudinal axis (305) of the first (120; 310) and of the second magnetically conductive or magnetic elements (130; 320), and is connected to an evaluation unit (220) such that the magnetic component (100; 300) and the magnetic sensor (210) can be moved relative to one another.

9. Length measuring system (1) according to Claim 8, whereas the magnetic sensor (210) and the evaluation unit (220) are surrounded by a non-magnetic housing material (240) with an external diameter which is less than an internal diameter of the magnetic component (100; 300).

10. Length measuring system (1) according to either of Claims 8 or 9, whereas the magnetic sensor (210) is a magnetoresistive angle sensor, in particular an anisotropic magnetoresistive angle sensor (AMR angle sensor) or a GMR angle sensor, or a 2D-Hall sensor.

11. Length measuring method with a length measuring system (1) according to one of Claims 8 to 10, comprising the steps of:
a) moving (a) the magnetic component (100; 300) and the magnetic sensor (210) relative to one another,
b) detecting (b) a magnetic field angle change by means of the magnetic sensor (210) between the first (120; 310) and the second helical magnetically conductive or magnetic elements (130; 320) and
c) evaluating (c) the detected magnetic field angle change to form a travel signal.

12. Production method for a magnetic component (100; 300) according to one of Claims 1 to 7, comprising the steps of:
a) providing (A) a first (120; 310) and a second helical and magnetically conductive or magnetizable element (130; 320) with a first (122, 132; 312, 322) and a second axial end (124, 134; 314, 324) and
b) arranging (B) the first (120; 310) and the second magnetically conductive or magnetizable elements (130; 320) parallel to one another along a common longitudinal axis (305) such that a magnetic field can be formed between the first (120; 310) and the second magnetically conductive or magnetizable elements (130; 320), the angle of said magnetic field relative to the common longitudinal axis (305) continuously rotating along a predeterminable length.

13. Production method according to Claim 12, whereas the provision of the first (120; 310) and of the second magnetically conductive or magnetizable elements (130; 320) is brought about by means of stamping, punching, injection molding or laser cutting.

14. Production method according to Claim 12, whereas the first (120; 310) and the second magnetically conductive or magnetizable elements (130; 320) are formed from polymerbound ferrite material in an injection-molding process.

15. Production method according to Claim 12, whereas the first (120; 310) and the second magnetically conductive or magnetizable elements (130; 320) are formed from hard ferrite in a sintering process.

16. Production method according to one of Claims 12 to 15, whereas the first (120) and the second elements (130) are magnetically conductive elements (120, 130), wherein the production method comprises the following further step:
c) arranging (C) a permanent magnet (110) adjacent to the first axial end (122, 132) of the first (120) and of the second magnetically conductive elements (130), wherein the first (120) and the second magnetically conductive elements (130) are a first and a second pole lamination.

17. Production method according to one of Claims 12 to 16, comprising the further step of:
d) arranging (D) the first (120; 310) and the second magnetically conductive or magnetizable elements (130; 320) on a non-magnetic substrate (140; 330).

## Revendications

1. Pièce (100; 300) magnétique pour un système (1) magnétique de mesure de longueur, comprenant :
a) un premier élément (120; 310) hélicoïdal, conducteur magnétiquement ou magnétique, ayant une première (122; 312) et une deuxième extrémités (124; 314) axiales, ainsi que
b) un deuxième élément (130; 320) hélicoïdal, conducteur magnétiquement ou magnétique, ayant une première (132; 322) et une deuxième extrémités (134; 324) axiales, tandis que
c) le premier (120; 310) et le deuxième éléments (130; 320) conducteurs magnétiquement ou magnétiques sont disposés l'un par rapport à l'autre en symétrie axiale suivant un axe (305) longitudinal commun de manière à
d) pouvoir constituer, entre le premier (120; 310) et le deuxième éléments (130; 320) conducteurs magnétiquement ou magnétiques, un champ magnétique dont l'angle tourne par rapport à l'axe (305) longitudinal commun continuellement sur une longueur pouvant être donnée à l'avance,
**caractérisée en ce que**
le premier élément conducteur magnétiquement est constitué sous la forme d'une première tôle (120) polaire et le deuxième élément conducteur magnétiquement est constitué sous la forme d'une deuxième tôle (130) polaire, les tôles (120; 130) polaires étant en un matériau bon conducteur magnétiquement, qui n'est pas à magnétisme permanent,
dans laquelle les tôles (120; 130) polaires sont hélicoïdales et oblongues et ont une première extrémité axiale, ainsi qu'une deuxième extrémité (122; 132) axiale et dans laquelle un aimant (110) permanent circulaire à deux pôles ferme l'ouverture de la pièce à la première extrémité (122; 132) axiale et se termine au ras de l'extrémité des tôles (120; 130) polaires et
la pièce (110) magnétique est ouverte à la deuxième extrémité (124; 134) axiale de manière à ce qu'un agencement (200) de capteur magnétique puisse y pénétrer.

2. Pièce (100) suivant la revendication 1, tandis que la première extrémité (122) du premier élément (120) conducteur magnétiquement et la première extrémité (132) du deuxième élément (130) conducteur magnétiquement sont reliées à un aimant (110) permanent.

3. Pièce (100) suivant la revendication 2, tandis que l'aimant (110) permanent est un aimant (110) permanent magnétisé bipolairement, tandis qu'un premier pôle du deuxième aimant (110) permanent magnétisé bipolairement est voisin de la première extrémité (122) axiale du premier élément (120) conducteur magnétiquement et qu'un deuxième pôle de l'aimant (110) permanent magnétisé bipolairement est voisin de la première extrémité (132) axiale du deuxième élément (130) conducteur magnétiquement.

4. Pièce (300) suivant la revendication 1, tandis que le premier (310) et le deuxième éléments (320) magnétiques sont magnétisés bipolairement.

5. Pièce (100; 300) suivant l'une des revendications précédentes, tandis que le premier (120; 310) et le deuxième éléments (130; 320) conducteurs magnétiquement ou magnétiques sont mis sur un matériau (140; 330) support amagnétique.

6. Pièce (100; 300) suivant l'une des revendications précédentes, tandis que le premier (120; 310) et le deuxième éléments (130; 320) conducteurs magnétiquement ou magnétiques sont disposés suivant une symétrie axiale en opposition l'un à l'autre.

7. Pièce (100; 300) suivant l'une des revendications précédentes, tandis que le premier (120; 310) et le deuxième éléments (130; 320) conducteurs magnétiquement ou magnétiques sont tordus sur leur longueur entre 45° et 360°, notamment d'environ 180°, autour de l'axe (305) longitudinal commun.

8. Système (1) de mesure de longueur comprenant :
a) une pièce (100; 300) magnétique suivant l'une des revendications 1 à 7, ainsi que
b) un capteur (210) magnétique, qui peut être mis entre le premier (120; 310) et le deuxième (130; 320) éléments, hélicoïdal, conducteur magnétiquement ou magnétique perpendiculairement à l'axe (305) longitudinal commun du premier (120'; 310) et du deuxième éléments (130; 320) conducteurs magnétiquement ou magnétiques, et être relié à une unité (220) d'exploitation, de manière à ce que la pièce (100; 300) magnétique et le capteur (210) magnétique puissent être déplacés l'un par rapport à l'autre.

9. Système (1) de mesure de longueur suivant la revendication 8, tandis que le capteur (210) magnétique et l'unité (220) d'exploitation sont entourés d'un matériau (240) d'enveloppe amagnétique d'un diamètre extérieur plus petit qu'un diamètre intérieur de la pièce (100; 300) magnétique.

10. Système (1) de mesure de longueur suivant l'une des revendications 8 à 9, tandis que le capteur (210) magnétique est un capteur d'angle magnétorésistif, notamment un capteur d'angle magnétorésistif anisotrope (capteur d'angle AMR) ou un capteur d'angle GMR ou un capteur de Hall 2D.

11. Procédé de mesure de longueur par un système (1) de mesure de longueur suivant l'une des revendications 8 à 10, comprenant les stades :
a) déplacement (a) de la pièce (100; 300) magnétique et du capteur (210) magnétique l'un par rapport à l'autre,
b) détection (b) d'une variation de l'angle du champ magnétique au moyen du capteur (210) magnétique entre le premier (120; 310) et le deuxième éléments (130; 320), hélicoïdal, conducteur magnétiquement ou magnétique et
c) exploitation (c) de la variation d'angle du champ magnétique qui a été détectée en un signal de trajet.

12. Procédé de fabrication d'une pièce (100; 300) magnétique suivant l'une des revendications 1 à 7, qui a les stades :
a) on se procure (A) un premier (120; 310) et un deuxième éléments (130; 320) hélicoïdaux et conducteurs magnétiquement ou magnétisables ayant une première (122; 132; 312; 322) et une deuxième extrémités (124; 134; 314; 324) axiales et
b) on met (B) le premier (120; 310) et le deuxième éléments (130; 320) conducteurs magnétiquement ou magnétisables parallèlement l'un à l'autre suivant un axe (305) longitudinal commun, de manière à pouvoir constituer entre le premier (120; 310) et le deuxième éléments (130; 320) conducteurs magnétiquement ou magnétisables un champ magnétique, dont l'angle tourne par rapport à l'axe (305) longitudinal commun continuellement sur une longueur pouvant être donnée à l'avance.

13. Procédé de fabrication suivant la revendication 12, tandis que l'on se procure le premier (120; 310) et le deuxième éléments (130; 320) conducteurs magnétiquement ou magnétisables au moyen d'un estampage, d'un découpage, d'un moulage par injection ou d'une découpe par laser.

14. Procédé de fabrication suivant la revendication 12, tandis que l'on forme le premier (120; 310) et le deuxième éléments (130; 320) conducteurs magnétiquement ou magnétisables en un matériau de ferrite lié par de la matière plastique dans le procédé de moulage par injection.

15. Procédé de fabrication suivant la revendication 12, tandis que l'on forme le premier (120; 310) et le deuxième éléments (130; 320) conducteurs magnétiquement ou magnétisables en une ferrite dure dans un procédé de frittage.

16. Procédé de fabrication suivant la revendication 12 à 15, tandis que le premier (120) et le deuxième éléments (130) sont des éléments (120; 130) conducteurs magnétiquement, dans lequel le procédé de fabrication comprend le stade supplémentaire :
c) on met (C) un aimant (110) permanent au voisinage de la première extrémité (122; 132) axiale du premier (120) et du deuxième éléments (130) conducteurs magnétiquement, le premier (120) et le deuxième éléments (130) conducteurs magnétiquement étant une première et une deuxième tôles polaires.

17. Procédé de fabrication suivant l'une des revendications 12 à 16, qui a le stade supplémentaire :
d) on met (D) le premier (120; 310) et le deuxième éléments (130; 320) conducteurs magnétiquement ou magnétisables sur un matériau (140; 330) de support amagnétique.
